# EUROPÄISCHE PATENTSCHRIFT

(11) **EP 3 592 465 B1**
(45) Veröffentlichungstag und Bekanntmachung des Hinweises auf die Patenterteilung: **11.11.2026**
(21) Anmeldenummer: 18710409.6
(22) Anmeldetag: 07.03.2018
(51) Int. Cl.: B03C 3/017, B03C 3/145, B03C 3/15, B03C 3/155, B03C 3/30, B03C 3/011, B03C 3/36, B01D 46/00, B27G 3/00

(54) **ABSCHEIDEVERFAHREN, ABSCHEIDEVORRICHTUNG UND ANORDNUNG EINER ABSCHEIDEVORRICHTUNG MIT EINER HOLZBEARBEITUNGSMASCHINE**
SEPARATING METHOD, SEPARATING DEVICE AND ARRANGEMENT OF A SEPARATING DEVICE WITH A WOOD PROCESSING MACHINE
PROCÉDÉ DE SÉPARATION, DISPOSITIF DE SÉPARATION ET ENSEMBLE D'UN DISPOSITIF DE SÉPARATION POURVU D'UNE MACHINE D'USINAGE DU BOIS

(30) Priorität: 07.03.2017 AT 501742017
(43) Veröffentlichungstag der Anmeldung: 15.01.2020
(73) Patentinhaber: Universität für Bodenkultur Wien, 1180 Wien (AT)
(72) Erfinder: MYNA, Roman, 1100 Wien (AT); WIMMER, Rupert, 5431 Kuchl (AT)
(74) Vertreter: Puchberger & Partner Patentanwälte
(86) Internationale Anmeldenummer: PCT/EP2018/055553
(87) Internationale Veröffentlichungsnummer: WO 2018/162528

(56) Entgegenhaltungen:
- EP-A1- 2 033 564
- WO-A1-98/11992
- DE-A1- 3 914 673
- DE-A1- 4 222 069
- DE-B- 1 084 246
- DE-C- 939 990
- DE-C1- 3 731 672
- JP-A- 2008 110 329
- JP-A- 2008 126 221
- US-A- 3 623 295
- US-A- 3 736 727
- US-A- 5 336 299
- US-A- 5 885 330

## Beschreibung

Die Erfindung betrifft ein Abscheideverfahren, eine Abscheidevorrichtung und eine Anordnung gemäß den Merkmalen der unabhängigen Patentansprüche.

Aus dem Stand der Technik ist es bekannt, den bei der spanabhebenden Bearbeitung oder Verarbeitung von Holz entstehenden Holzstaub aus einem Luftstrom zu filtern. Herkömmliche Filter, wie sie beispielsweise in Tischlerwerkstätten oder Holzverarbeitungsbetrieben eingesetzt werden, umfassen mechanische Filter, wie z.B. Schlauchfilter oder auch Zyklone.

Derartige mechanische Filter sind jedoch in ihrer Filterleistung und Filterfeinheit begrenzt. Insbesondere ist es bei herkömmlichen mechanischen Filtern nicht möglich, bei ausreichendem Durchsatz Holzfeinstaubpartikel zu filtern. Holzfeinstaubpartikel, insbesondere Feinstaubpartikel von Harthölzern bzw. Laubhölzern, gelten jedoch als gesundheitsschädlich und haben insbesondere aufgrund ihrer Lungengängigkeit auch eine karzinogene Wirkung. Aus diesem Grund besteht am Markt eine Nachfrage nach Abscheidevorrichtungen, die dazu eingerichtet und geeignet sind, Holzfeinstaubpartikel effizient abzuscheiden.

In anderen technischen Gebieten sind Feinstaubfilter bekannt, die aber aufgrund ihrer Struktur und Wirkungsweise für herkömmliche Holzbearbeitungsanlagen nicht geeignet sind.

Beispielsweise sind Feinstaubfilter für Verbrennungskraftmaschinen bekannt, die in regelmäßigen Abständen durch Ausbrennen regeneriert werden müssen. Eine derartige Filteranordnung wäre jedoch für einen bei einer Holzbearbeitungsanlage anfallenden Durchsatz nicht wirtschaftlich betreibbar.

Bei Großfeuerungsanlagen sind elektrostatische Abscheider bekannt, bei denen Sprühelektroden vorgesehen sind, die eine Aufladung von Rußpartikeln bewirken, um eine elektrostatische Abscheidung zu ermöglichen. Derartige Sprühelektroden sind aber bei Holzfeinstaubpartikeln nicht effizient, da Holzfeinstaubpartikel eine grob-poröse, schwammige Struktur aufweisen, bei der nur ein kleiner Teil der Oberfläche des Holzfeinstaubpartikels außenliegend angeordnet ist. Ein Großteil der Ladung würde bei einer derartigen Anordnung nicht an der nutzbaren außenliegenden Oberfläche der Partikel verbleiben, sondern in den Vertiefungen der grob-porösen, schwammigen Struktur absorbiert werden, wodurch keine ausreichende Anziehungskraft für eine Abscheidung generiert werden könnte.

Abscheidevorrichtungen für weitere Staub- bzw. Feinstaubmaterialien sind bekannt. Beispielsweise beschreibt die EP 2 033 564 A1 eine Staubabscheideeinheit für Staubsauger. Die US 3,623,295 A beschreibt ein Abscheidesystem für Feinstaub aus der Lust zur Verringerung der Luftverschmutzung. Ein ähnliches System wird auch in der US 3,736,727 A beschrieben. Die DE 1 084 246 B offenbart einen Fliehkraftabscheider in Zyklonbauweise zur Abscheidung von Staub. Ein elektrostatischer Filter wird in der US 5,336,299 A beschrieben. Die DE 3 731 672 C1 beschreibt einen Zyklonabscheider für die Abscheidung von Holzstaub, jedoch ohne elektrostatische Aufladung der Holzpartikel.

Aufgabe der Erfindung ist es nun, eine Abscheidevorrichtung für Holzstaubpartikel, insbesondere für Holzfeinstaubpartikel zu schaffen, die eine effiziente Abscheidung ermöglicht, und die für herkömmliche Holzbearbeitungsmaschinen, insbesondere für spanabhebende Holzbearbeitungsmaschinen, wie sie beispielsweise in Tischlereiwerkstätten oder Holzverarbeitungseinrichtungen verwendet werden, geeignet ist. Ebenso ist es Aufgabe der Erfindung, ein derartiges Verfahren zu schaffen.

Diese Aufgabe wird insbesondere durch die Merkmale der unabhängigen Patentansprüche gelöst.

Überraschenderweise wurde festgestellt, dass Holzfeinstaubpartikel und im Speziellen Laubholzfeinstaubpartikel und Hartholzfeinstaubpartikel über den triboelektrischen Effekt zu Holzstaubagglomeraten agglomeriert werden können. Diese Agglomerate weisen eine erhöhte Größe und eine erhöhte Masse auf, die dazu geeignet ist, in einem mechanischen Abscheider abgeschieden zu werden. Durch die Größenzunahme bei der Agglomeration werden demnach größere Holzpartikelanhäufungen geschaffen, die selbst in herkömmlichen mechanischen Filtern, wie insbesondere in einem herkömmlichen Zyklon oder in einem angepassten Zyklon, abgeschieden werden können.

Die triboelektrische Aufladung von Festkörpern ist ein bekannter physikalischer Effekt, der insbesondere bei Kunststoffen stark ausgeprägt ist. Eine triboelektrische Aufladung kommt zustande, wenn zwei verschiedene, zunächst elektrisch neutrale, Substanzen in Berührung gebracht, gegebenenfalls aneinander gerieben, und wieder getrennt werden. Einige Substanzen geben dabei Elektronen bzw. Ladungen ab und werden dadurch positiv aufgeladen. Andere hingegen nehmen dabei Elektronen bzw. Ladungen auf und erhalten dadurch einen negativen Ladungsüberschuss. In Versuchen wurde eine triboelektrische Reihe ermittelt, die Aufschluss darüber gibt, ob zwei unterschiedliche Reibpartner jeweils positiv oder negativ geladen werden.

Beispielsweise sind folgende Stoffe in folgender Reihenfolge von positiv bis negativ in der triboelektrischen Reihe bekannt: Tierfell, Glas, Nylon, Wolle, Seide, Aluminium, Papier, Baumwolle, Eisen, Holz, Hartgummi, Kupfer, Nickel, Bronze, Gold, Platin, Kunstseide, Polystyren, Polyester, Polyurethan, Polyethylen, Polypropylen, PVC, Vinyl, Silikon, Teflon.

Wird Holz, das sich in etwa in der Mitte dieser Reihe befindet, an einem in der Reihe oberhalb stehenden Material, beispielsweise an Glas gerieben, so wird das Holz negativ und das andere Material, also beispielsweise Glas, positiv aufgeladen. Wird Holz an einem in der Reihe unterhalb stehenden Material, beispielsweise an Vinyl gerieben, so wird das Holz positiv und das andere Material, also beispielsweise das Vinyl, negativ aufgeladen.

Die Erfindung betrifft eine Abscheidevorrichtung für Holzstaubpartikel,
- wobei die Holzstaubpartikel Holzfeinstaubpartikel mit einer Größe von kleiner als 5 µm, insbesondere mit einer Größe von kleiner als 1 µm, sind oder umfassen,
- wobei die Abscheidevorrichtung einen Strömungskanal umfasst,
- wobei der Strömungskanal im Betrieb von einem mit den Holzfeinstaubpartikeln beladenen Luftstrom durchströmt ist,
- wobei der Strömungskanal einen elektrostatischen Aufladeabschnitt zur zumindest teilweisen elektrostatischen Aufladung der Holzfeinstaubpartikel umfasst,
- wobei der Strömungskanal im oder nach dem elektrostatischen Aufladeabschnitt einen Agglomerationsabschnitt zur elektrostatischen Agglomeration von Holzfeinstaubpartikeln zu Holzstaubagglomeraten umfasst,
- wobei dem Agglomerationsabschnitt ein mechanischer Abscheider zur Abscheidung der Holzstaubagglomeraten nachgeordnet ist,

Erfindungsgemäß ist vorgesehen, dass im Aufladeabschnitt mindestens ein, insbesondere mehrere, triboelektisch wirkende Aufladeelemente zur Änderung der elektrischen Ladung mehrerer Holzstaubpartikel oder Holzfeinstaubpartikel vorgesehen sind.

Erfindungsgemäß ist vorgesehen,
- dass die Aufladeelemente positiv aufladende Elemente umfassen, die eine positive Aufladung der diese Elemente berührenden Holzstaubpartikel oder Holzfeinstaubpartikel bewirken,
- und/oder dass die Aufladeelemente negativ aufladende Elemente umfassen, die eine negative Aufladung der diese Elemente berührenden Holzstaubpartikel oder Holzfeinstaubpartikel bewirken.

Gegebenenfalls ist vorgesehen,
- dass die negativ aufladenden Elemente aus einem Material gebildet sind oder ein Material umfassen, das in der triboelektrischen Reihe oberhalb von Holz angeordnet ist, also beispielsweise Tierfell, Glas, Nylon, Wolle, Seide, Aluminium, Papier, Baumwolle oder Eisen ist oder umfasst,
- und/oder dass die positiv aufladenden Elemente aus einem Material gebildet sind oder ein Material umfassen, das in der triboelektrischen Reihe unterhalb von Holz angeordnet ist, also beispielsweise Hartgummi, Kupfer, Nickel, Bronze, Gold, Platin, Kunstseide, Polystyren, Polyester, Polyurethan, Polyethylen, Polypropylen, PVC, Vinyl, Silikon oder Teflon ist oder umfasst.

Gegebenenfalls ist vorgesehen,
- dass der Aufladeabschnitt mindestens einen positiv aufladenden Abschnitt umfasst, in dem die positiv aufladenden Elemente vorgesehen sind,
- dass der Aufladeabschnitt mindestens einen negativ aufladenden Abschnitt umfasst, in dem die negativ aufladenden Elemente vorgesehen sind,
- und dass der positiv aufladende Abschnitt und der negativ aufladende Abschnitt räumlich voneinander abgegrenzt, insbesondere entlang der Strömungsrichtung des mit Holzfeinstaubpartikeln beladenen Luftstroms nacheinander und/oder nebeneinander angeordnet sind.

Erfindungsgemäß ist ferner ist vorgesehen,
- dass im Aufladeabschnitt zwei, insbesondere strömungstechnisch parallel verlaufende, Teilkanäle zur Aufteilung des mit Holzstaubpartikeln oder Holzfeinstaubpartikeln beladenen Luftstroms in zwei Teilströme vorgesehen sind,
- wobei im ersten Teilkanal Aufladeelemente zur Aufladung der Holzstaubpartikel oder Holzfeinstaubpartikel in der einen, insbesondere positiven oder negativen, Polarität vorgesehen sind,
- und wobei im zweiten Teilkanal keine Aufladeelemente oder Aufladeelemente zur Aufladung der Holzstaubpartikel oder Holzfeinstaubpartikel in der anderen Polarität vorgesehen sind.

Gegebenenfalls ist vorgesehen, dass die beiden Teilkanäle zur Zusammenführung der beiden unterschiedlich geladenen Teilströme und zur Agglomeration der unterschiedlich geladenen Holzstaubpartikel oder Holzfeinstaubpartikel zu Holzstaubagglomeraten im Agglomerationsabschnitt zusammengeführt sind.

Gegebenenfalls ist vorgesehen, dass die Aufladeelemente zur Aufladung der Holzstaubpartikel oder Holzfeinstaubpartikel in den Kanal, insbesondere in zumindest einen der Teilkanäle ragen.

Gegebenenfalls ist vorgesehen, dass die Aufladeelemente des Aufladeabschnitts im Betrieb vom holzfeinstaubpartikelbeladenen Luftstrom umströmt sind.

Gegebenenfalls ist vorgesehen, dass die Aufladeelemente im Aufladeabschnitt entlang der Strömungsrichtung versetzt oder verdreht zueinander angeordnet sind.

Gegebenenfalls ist vorgesehen, dass die im Aufladeabschnitt angeordneten Aufladeelemente zur Aufladung der Holzstaubpartikel oder Holzfeinstaubpartikel im Aufladeabschnitt in zumindest eine Richtung vorzugsweise in alle drei Raumrichtungen bewegbar angeordnet sind.

Gegebenenfalls ist vorgesehen, dass die Aufladeelemente um ihre Längsachse drehbar angeordnet sind.

Gegebenenfalls ist vorgesehen, dass die Aufladeelemente eine strömungstechnisch günstige Form, wie beispielsweise eine quer angeströmte zylindrische Form, aufweisen.

Gegebenenfalls ist vorgesehen, dass die Aufladeelemente einen leitenden Kern, wie beispielsweise einen Metallkern, umfassen, der an seiner dem partikelbeladenen Luftstrom ausgesetzten Außenseite mit einer Schicht eines triboelektrisch wirkenden Materials versehen ist.

Gegebenenfalls ist vorgesehen, dass die Aufladeelemente je einen Kern, der gegebenenfalls leitend ausgeführt ist, und eine den Kern umschließende leitende Hülse umfassen, die zumindest an ihrer dem partikelbeladenen Luftstrom ausgesetzten Außenseite mit einer Schicht eines triboelektrisch wirkenden Materials versehen ist. Bevorzugt ist die Hülse elektrisch leitend mit dem Kern verbunden, sodass eine Erdung der Hülse und der triboelektrischen Schicht über eine Erdung des Kerns erfolgen kann.

Gegebenenfalls ist die Hülse drehbar am Kern angeordnet. Bevorzugt ist der Kern rotationssymmetrisch bzw. zylindrisch ausgebildet.

Gegebenenfalls ist vorgesehen, dass die Aufladeelemente geerdet oder erdbar sind, und/oder dass eine Vorrichtung zur periodischen oder intermittierenden Erdung und Unterbrechung der Erdung der Aufladeelemente vorgesehen ist.

Gegebenenfalls ist vorgesehen, dass der mechanische Abscheider zur Abscheidung der Holzstaubagglomerate als Trägheitsabscheider, Fliehkraftabscheider, insbesondere als Zyklon, oder als Filter ausgebildet ist.

Insbesondere betrifft die Erfindung eine Anordnung einer Holzbearbeitungsmaschine, vorzugsweise einer spanabhebenden Holzbearbeitungsmaschine, mit einer Abscheidevorrichtung, insbesondere Anlage umfassend eine Holzbearbeitungsmaschine und eine erfindungsgemäße Abscheidevorrichtung.

Gegebenenfalls ist vorgesehen, dass entlang der Strömungsrichtung des holzfeinstaubpartikelbeladenen Luftstroms vor dem Agglomerationsabschnitt, insbesondere im Strömungskanal, ein Vorfilter zur Vorfilterung von Holzpartikeln mit einer Größe von größer als 5 µm vorgesehen ist.

Gegebenenfalls ist vorgesehen, dass ein Gebläse zur Förderung des holzfeinstaubpartikelbeladenen Luftstroms vorgesehen ist.

Insbesondere betrifft die Erfindung ein Verfahren zur Abscheidung von Holzstaubpartikeln, insbesondere von Holzfeinstaubpartikeln mit einer Größe von kleiner als 5 µm, insbesondere mit einer Größe von kleiner als 1 µm, aus einem mit den Holzfeinstaubpartikeln beladenen Luftstrom,
- wobei zumindest ein Teil des partikelbeladenen Luftstroms durch einen elektrostatischen Aufladeabschnitt geleitet wird, in dem zumindest ein Teil der Holzstaubpartikel oder Holzfeinstaubpartikel elektrostatisch aufgeladen wird,
- wobei der partikelbeladene Luftstrom durch einen dem elektrostatischen Aufladeabschnitt nachfolgenden Agglomerationsabschnitt zur elektrostatischen Agglomeration der Holzstaubpartikel oder Holzfeinstaubpartikel zu Holzstaubagglomeraten geleitet wird,
- wobei der partikelbeladene Luftstrom durch einen dem Agglomerationsabschnitt nachgeordneten mechanischer Abscheider zur Abscheidung der Holzstaubagglomerate geleitet wird,
und wobei die elektrostatische Aufladung im Aufladeabschnitt durch tribolektrische Aufladung erfolgt.

Das Verfahren wird bevorzugt auf einer erfindungsgemäßen Abscheidevorrichtung und/oder Anlage ausgeführt.

Aufgrund der oberflächlichen Reibung der Holzfeinstaubpartikel an den triboelektrischen Elementen kommt es zu einer oberflächlichen Aufladung der Holzstaubpartikel oder Holzfeinstaubpartikel. Dies hat den Vorteil, dass diese lokale Aufladung der Feinstaubpartikel außen liegend und dadurch wirksamer ist.

Der triboelektrische Effekt wird bei der vorliegenden Erfindung dazu verwendet, die Holzstaubpartikel oder Holzfeinstaubpartikel eines Luftstroms unterschiedlich bzw. unterschiedlich stark zu laden, sodass es zu einer Agglomeration der Partikel durch statische Anziehungskräfte kommt.

Bevorzugt ist vorgesehen, dass die Aufladeelemente in den Strömungskanal ragen bzw. diesen Strömungskanal durchsetzen. Gegebenenfalls ist vorgesehen, dass der Strömungskanal in zwei Teilkanäle aufgeteilt wird, um auch den partikelbeladenen Luftstrom in zwei Teilströme aufzuteilen. Durch diese Aufteilung kann ein Teil der Holzfeinstaubpartikel unabhängig von einem anderen Teil der Holzfeinstaubpartikel bearbeitet und insbesondere aufgeladen werden. Bevorzugt ist vorgesehen, dass die beiden Teilströme nach dem Aufladeabschnitt wieder zusammengeführt sind, um eine Agglomeration der Holzfeinstaubpartikel zu Holzfeinstaubpartikelagglomeraten zu bewirken.

Gemäß einer bevorzugten Ausführungsform kann vorgesehen sein, dass die Aufladeelemente regelmäßig, insbesondere parallel, angeordnete Objekte aus triboelektrischen Materialien sind. Durch die Gitter bzw. rechenförmige Anordnung der Aufladeelemente kann der Luftwiderstand im Strömungskanal niedrig gehalten werden, wobei dennoch Verwirbelungen bewirkt werden, sodass die Holzfeinstaubpartikel an den Aufladeelementen aufprallen. Die Aufladeelemente sind bevorzugt in einem Halterungssystem angeordnet.

Gegebenenfalls ist vorgesehen, dass die Aufladeelemente Rundstäbe umfassen, die mit einer Beschichtung oder Nanobeschichtung eines ausgewählten, triboelektrisch wirkenden, Materials beschichtet sind. Insbesondere reicht zur Erzielung der triboelektrischen Aufladung der Holzfeinstaubpartikel eine dünne Beschichtung der Aufladeelemente mit einem gewünscht triboelektrisch wirkenden Material.

In allen Ausführungsformen kann vorgesehen sein, dass die Aufladeelemente einen leitenden, insbesondere durchgehenden, Kern, wie beispielsweise einen Metallkern, umfassen, der an seiner dem partikelbeladenen Luftstrom ausgesetzten Außenseite mit einer dünnen Schicht eines triboelektrisch wirkenden Materials versehen ist. Durch die Erdung des triboelektrisch wirkenden Materials über die Erdung des leitenden Kerns kann somit effizient und schnell eine Regenerierung der triboelektrisch wirkenden Schicht an der Außenseite des Aufladeelements bewirkt werden.

Gegebenenfalls ist vorgesehen, dass sich die Aufladeelemente kontinuierlich drehen und somit für den Aufladeprozess die gesamte Oberfläche genutzt werden kann. Dadurch können gegebenenfalls der Verschleiß und die Regenerationsintervalle optimiert werden.

Um die Stärke der Aufladung zu erhöhen, können gegebenenfalls mehrere Aufladeelemente nacheinander im Luftkanal angeordnet werden. Dadurch wird die Anzahl an Reibungskontakten erhöht. Wenn mehrere Aufladeelemente nacheinander im Luftstrom angeordnet werden, so ist es vorteilhaft, diese nicht deckungsgleich, sondern versetzt und/oder verdreht zueinander anzuordnen. Bevorzugt ist daher vorgesehen, dass entlang der Strömungsrichtung mehrere positiv oder mehrere negativ aufladenden Elemente vorgesehen sind, sodass die Holzfeinstaubpartikel mit höherer Wahrscheinlichkeit an mehreren Aufladeelementen aufgeladen werden, wodurch eine stärkere Ladung erzielt werden kann.

Gemäß einer Ausführungsform der Erfindung können die Aufladeelemente innerhalb des Luftkanals entlang einer oder mehrerer Achsen zueinander verschiebbar angeordnet sein, um die Kontaktanzahl bzw. den Luftwiderstand variieren und einstellen zu können.

Bevorzugt ist die Abscheidevorrichtung eine Vorrichtung zur triboelektrischen, elektrostatischen Aufladung von Holzfeinstaubpartikeln durch mechanische Reibung, die aus in einem Strömungskanal gezielt positionierte Aufladeelemente umfasst. Bevorzugt wird ein Gemisch aus Luft und Holzstaub, insbesondere ein Aerosol, durch den Strömungskanal geleitet. Dadurch wird bei jedem Kontakt der Partikel mit den einzelnen Aufladeelementen eine Ladung des Partikels an dessen Oberfläche gezielt positiv oder negativ erhöht. Die Aufladeelemente sind bevorzugt regelmäßig, insbesondere parallel zueinander angeordnet und zumindest teilweise aus gezielt ausgesuchten Materialien der triboelektrischen Reihe gebildet, welche eine unterschiedliche Dielektrizitätskonstante im Vergleich zu den Holzpartikeln aufweisen. Die Aufladeelemente ermöglichen durch ihre regelmäßige Anordnung einerseits einen geringen Luftwiderstand und andererseits eine hohe Kontaktanzahl. Die Aufladeelemente können beispielsweise als Rundstäbe ausgebildet sein.

Die Aufladeelemente können bevorzugt aus einem leitenden Kern mit einer Nanobeschichtung oder einer dünnen Beschichtung des gewählten triboelektrischen Materials gebildet sein. Dies ermöglicht eine rasche Regenerierung durch elektrische Erdung.

Gegebenenfalls betrifft die Erfindung ein Verfahren zur Abscheidung von Holzfeinstaubpartikeln. Hierfür wird der mit Holzfeinstaubpartikeln beladene Luftstrom, der beispielsweise von einer Holzbearbeitungs- oder Holzverarbeitungsmaschine kommt, zuerst durch einen Aufladeabschnitt, dann durch einen Agglomerationsabschnitt und dann durch einen mechanischen Abscheider geleitet. Durch die Aufladung und die nachfolgende Agglomeration werden aus Feinstaubpartikeln größere Holzpartikelagglomerate gebildet, die in einem mechanischen Abscheider, wie beispielsweise in einem Zyklon oder einem mechanischen Filter, abgeschieden werden können.

Insbesondere umfasst das Verfahren die Schritte, dass der partikelbeladene Luftstrom zumindest teilweise durch einen elektrostatischen Aufladeabschnitt geleitet wird. Zumindest teilweise bedeutet, dass zumindest ein Teilstrom des partikelbeladenen Luftstroms abgezweigt und durch einen elektrostatischen Aufladeabschnitt geleitet wird. Gegebenenfalls wird jedoch auch der gesamte partikelbeladene Luftstrom durch einen elektrostatischen Aufladeabschnitt geleitet.

Der partikelbeladene Luftstrom wird insbesondere derart durch den Aufladeabschnitt geleitet, dass es zu einer unterschiedlichen Aufladung von Feinstaubpartikeln kommt. Beispielsweise wird ein Teil der Holzfeinstaubpartikel positiv und ein anderer Teil negativ aufgeladen. Gegebenenfalls kann aber auch lediglich ein Teil der Holzfeinstaubpartikel positiv oder negativ aufgeladen werden, wobei der andere Teil der Holzfeinstaubpartikel gar nicht oder nur geringfügig aufgeladen wird.

Insbesondere ist das Verfahren derart ausgestaltet, dass die Partikel derart unterschiedlich aufgeladen werden, sodass es zu einer elektrostatischen Anziehung und dadurch zu einer Agglomeration der Holzfeinstaubpartikel zu Holzstaubagglomeraten kommt.

Diese Agglomeration findet insbesondere in einem Agglomerationsabschnitt statt, wo die unterschiedlich aufgeladenen Holzfeinstaubpartikel zusammengeführt werden.

In allen Ausführungsformen ist bevorzugt vorgesehen, dass das Aufladen der Holzfeinstaubpartikel über triboelektrische Aufladung erfolgt. Hierzu werden, gemäß einer bevorzugten Ausführungsform, die Partikel mit triboelektrischen Elementen in Kontakt gebracht. Für eine etwaige Regeneration der triboelektrischen Elemente können diese geerdet werden. Die Erdung kann beispielsweise intermittierend oder regelmäßig erfolgen.

Die Verfahrensschritte ergeben sich insbesondere auch durch die Funktionsweise der Abscheidevorrichtung und der Anordnung.

In allen Ausführungsformen kann vorgesehen sein, dass die Abscheidevorrichtung auch zur Abscheidung von Holzstaubpartikeln mit einer Größe von größer als 5 µm geeignet und/oder eingerichtet sein. Schließlich sind der triboelektrische Effekt und die Aufladung von Holzpartikeln durch den triboelektrischen Effekt nicht auf die Größe der Holzstaubpartikel beschränkt.

Durch die Agglomeration der Holzpartikel in einem dem Aufladeabschnitt nachgeordneten Agglomerationsabschnitt kommt es zu einer Vergrößerung bzw. zu einer Agglomeration von Holzpartikeln. Gemäß einer Ausführungsform kann diese Agglomeration beispielsweise vor einem mechanischen Filter wie insbesondere einem Schlauchfilter oder einem Zyklon erfolgen, um die Wirksamkeit des Filters oder des Zyklons und insbesondere deren Filterleistung zu verbessern.

Gegebenenfalls ist vor dem Vorfilter ein erster Aufladeabschnitt mit einem ersten Agglomerationsabschnitt vorgesehen. Dadurch kann dieser Vorfilter effizienter arbeiten, da kleine Holzstaubpartikel schon vor dem Vorfilter agglomeriert werden. Gegebenenfalls kann zusätzlich oder alternativ zwischen Vorfilter und mechanischem Abscheider ein Aufladeabschnitt mit einem Agglomerationsabschnitt vorgesehen sein, um nach dem Vorfilter und vor dem mechanischen Abscheider eine Agglomeration der Holzstaubpartikel zu bewirken.

Die Holzstaubagglomerate können in allen Ausführungsformen
- reine Holzfeinstaubagglomerate aus Holzfeinstaubpartikeln mit einer Größe von kleiner als 5 µm, insbesondere mit einer Größe von kleiner als 1 µm;
- oder gemischte Holzstaubagglomerate umfassend Holzfeinstaub und Holzstaub sein.

Bei gemischten Holzstaubagglomeraten können sich beispielsweise Holzfeinstaubpartikel an ein größeres Holzstaubpartikel anlegen.

In weiterer Folge wird die Erfindung anhand exemplarischer, nicht einschränkender Ausführungsbeispiele und anhand der Figuren weiter beschrieben, wobei
Fig. 1 eine schematische Darstellung eines möglichen Aufbaus einer erfindungsgemäßen Anordnung,
die Figuren 2a, 2b und 2c unterschiedliche Ausführungsformen des Aufladeabschnitts einer Abscheidevorrichtung in einer schematischen Darstellung, wobei Fig. 2a und 2c erfindungsgemäße Ausführungsformen und Fig. 2b eine nicht erfindungsgemäße Ausführungsform darstellen,
Fig. 3 eine mögliche Konfiguration mit Anordnung der Aufladeelemente,
Figur 4 Details möglicher Aufladeelemente in einer schematischen Ansicht zeigt und
Figur 5 eine schematische Darstellung eines weiteren möglichen Aufbaus einer Anordnung bzw. einer Abscheidevorrichtung.

Wenn nicht anders angegeben, so entsprechen die Bezugszeichen folgenden Komponenten: Strömungskanal 1, Aufladeabschnitt 2, Agglomerationsabschnitt 3, mechanischer Abscheider 4, Aufladeelement 5, positiv aufladendes Element 6, negativ aufladendes Element 7, positiv aufladender Abschnitt 8, negativ aufladender Abschnitt 9, Strömungsrichtung 10, erster Teilkanal 11, zweiter Teilkanal 12, Längsachse (des Aufladeelements) 13, Vorrichtung (zur Erdung) 14, Holzbearbeitungsmaschine 15, Vorfilter 16, Gebläse 17, erste Gruppe 18, erster Rahmen 19, zweite Gruppe 20, zweiter Rahmen 21, zweiter Aufladeabschnitt 22, zweiter Agglomerationsabschnitt 23.

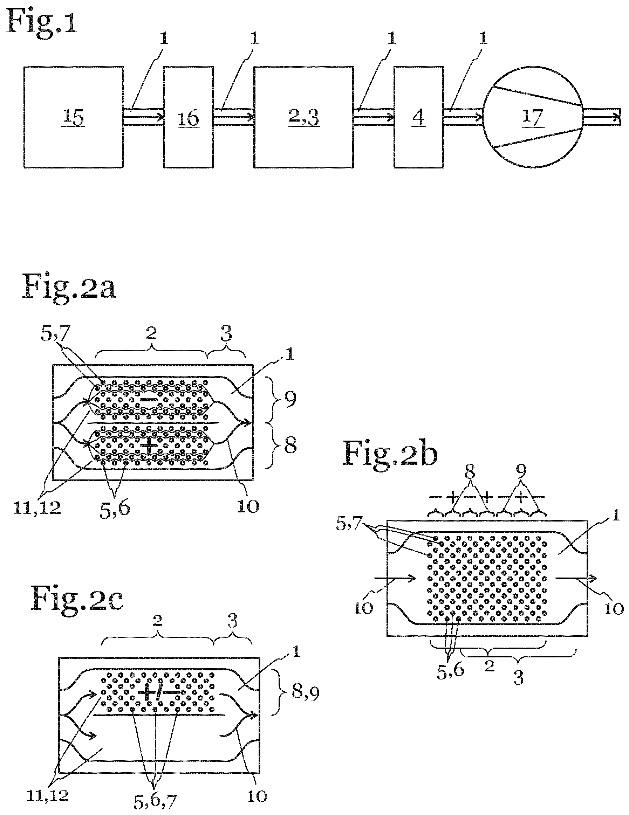

Fig. 1 zeigt eine Anordnung einer Holzbearbeitungsmaschine 15 mit einer Abscheidevorrichtung. Die Holzbearbeitungsmaschine 15 kann in allen Ausführungsformen eine herkömmlich spanabhebende Holzbearbeitungsmaschine, wie insbesondere eine Hobelmaschine, eine Schleifmaschine, eine Trennmaschine, insbesondere eine Kreis- oder Bandsäge, oder eine andere Holzbearbeitungsmaschine sein, bei der Holzfeinstaubpartikel anfallen. Derartige Holzbearbeitungsmaschinen weisen meist Absaugungsvorrichtungen auf, in denen Filter vorgesehen sind. Erfindungsgemäß wird zusätzlich oder alternativ die erfindungsgemäße Abscheidevorrichtung eingesetzt. Zum Abtransport des partikelbeladenen Luftstroms sind entlang eines Strömungskanals 1 ein Vorfilter 16, ein Aufladeabschnitt 2, ein Agglomerationsabschnitt 3, ein mechanischer Abscheider 4 und ein Gebläse 17 vorgesehen. Der Vorfilter 16 ist insbesondere zwischen der Holzbearbeitungsmaschine 15 und dem Aufladeabschnitt 2 oder dem Agglomerationsabschnitt 3 vorgesehen, um größere, einfach filterbare Partikel aus dem Luftstrom zu entfernen. Insbesondere können durch den Vorfilter 16 in allen Ausführungsformen Partikel mit einer Größe von größer als 5 µm gefiltert werden. Der Strömungskanal 1 erstreckt sich durch den Aufladeabschnitt 2 und den Agglomerationsabschnitt 3 der Abscheidevorrichtung. Nach dem Agglomerationsabschnitt 3 ist ein mechanischer Abscheider 4 vorgesehen. Dieser ist beispielsweise als Filter oder als Zyklon ausgebildet. Holzfeinstaub, der zuvor von dem Vorfilter 16 nicht abgeschieden werden konnte, wird im Agglomerationsabschnitt 3 zu größeren Partikeln agglomeriert. Diese größeren Partikel können nun durch den mechanischen Abscheider 4 abgeschieden werden. In allen Ausführungsformen kann vorgesehen sein, dass erst durch die Agglomeration eine Abscheidung der Teilchen im mechanischen Abscheider 4 ermöglicht ist. Insbesondere kann in allen Ausführungsformen vorgesehen sein, dass durch die Agglomeration auch jene Feinstaubpartikel im mechanischen Abscheider 4 abgeschieden werden können, die ohne Agglomeration vom mechanischen Abscheider 4 nicht abgeschieden werden könnten.

Ferner umfasst die Anordnung ein Gebläse 17. Das Gebläse 17 ist in der vorliegenden Ausführungsform als Sauggebläse ausgebildet, das den partikelbeladenen Luftstrom durch die genannten Komponenten befördert. Gemäß einer alternativen Ausführungsform kann das Gebläse 17 auch vor dem Vorfilter 16, dem Aufladeabschnitt 2 und/oder dem Agglomerationsabschnitt 3 angeordnet sein oder als Gebläse der Holzbearbeitungsmaschine 15 ausgebildet sein.

Die Figuren 2a, 2b und 2c zeigen unterschiedliche Ausführungsformen von Komponenten erfindungsgemäßer (Fig. 2a und 2c) und nicht erfindungsgemäßer (Fig. 2b) Abscheidevorrichtungen in schematischen Ansichten.

In Fig. 2a erstreckt sich der Strömungskanal 1 durch einen Aufladeabschnitt 2 und einen Agglomerationsabschnitt 3. Der Strömungskanal 1 ist insbesondere in einen ersten Teilkanal 11 und einen zweiten Teilkanal 12 aufgeteilt. Die beiden Teilkanäle 11, 12 verlaufen im Aufladeabschnitt 2 strömungstechnisch parallel zueinander und sind im Agglomerationsabschnitt 3 wieder zusammengeführt. In der Ausführungsform der Fig. 2a sind mehrere Aufladeelemente 5 vorgesehen. Insbesondere ist in dem ersten Teilkanal 11 ein negativ aufladender Abschnitt 9 vorgesehen. Dieser negativ aufladende Abschnitt 9 umfasst mehrere negativ aufladende Elemente 7, die dazu eingerichtet sind, die Holzfeinstaubpartikel des Luftstroms im ersten Teilkanal 11 negativ aufzuladen. Im zweiten Teilkanal 12 ist ein positiv aufladender Abschnitt 8 vorgesehen, der positiv aufladende Elemente 6 umfasst. Dadurch werden die Holzfeinstaubpartikel des Luftstroms im zweiten Teilkanal 12 positiv aufgeladen. Die Aufladung geschieht im Aufladeabschnitt 2. Die beiden Teilkanäle 11, 12 sind im oder vor dem Agglomerationsabschnitt 3 zusammengeführt, wodurch die negativ aufgeladenen Holzfeinstaubpartikel und die positiv aufgeladenen Holzfeinstaubpartikel zusammengeführt werden. Durch die statische Aufladung werden Anziehungskräfte bewirkt, durch die es zu einer Agglomeration der unterschiedlich aufgeladenen Holzfeinstaubpartikel im Agglomerationsabschnitt 3 kommt. Die Aufladeelemente 5 sind entlang der Strömungsrichtung 10 betrachtet versetzt angeordnet. Dadurch kommt es zu einer Verwirbelung und/oder Ablenkung der den Strömungskanal 1 durchströmenden Luftströmung. Feinstaubpartikel, die in dem Luftstrom mitbewegt werden, werden dadurch an die Aufladeelemente 5 geleitet und können sich dort triboelektrisch aufladen.

Fig. 2b zeigt eine nicht erfindungsgemäße Ausführungsform eines Teils einer möglichen Abscheidevorrichtung, bei der nur ein durchgehender Strömungskanal 1 vorgesehen ist. In diesem Strömungskanal 1 sind mehrere Aufladeelemente 5 vorgesehen. Die Aufladeelemente 5 sind in einem positiv aufladenden Abschnitt 8 und einem negativ aufladenden Abschnitt 9 vorgesehen. Insbesondere sind mehrere derartige Abschnitte 8 und 9 vorgesehen. Im positiv aufladenden Abschnitt 8 sind positiv aufladende Elemente 6 vorgesehen und im negativ aufladenden Abschnitt 9 sind negativ aufladende Elemente 7 vorgesehen. Die Abschnitte 8, 9 sind entlang der Strömungsrichtung 10 hintereinander angeordnet, wodurch es zuerst zu einer negativen, dann zu einer positiven und gegebenenfalls dann wieder zu einer negativen Aufladung kommt. Gemäß einer alternativen Ausführungsform kann auch zuerst eine positive und dann eine negative Aufladung erfolgen. Da in der Regel nicht alle Holzfeinstaubpartikel mit den Aufladeelementen 5 in Berührung kommen, werden einige Partikel positiv und einige Partikel negativ aufgeladen, womit es wiederum zu einer Anziehung und einer Agglomeration der Holzfeinstaubpartikel kommt. Der Aufladeabschnitt 2 weist somit mehrere unterschiedliche Aufladeelemente 5 auf. Der Agglomerationsabschnitt 3 überschneidet sich in der vorliegenden Ausführungsform mit dem Aufladeabschnitt 2.

Fig. 2c zeigt eine erfindungsgemäße Ausführungsform eines Teils einer Abscheidevorrichtung. Die Ausführungsform der Fig. 2c entspricht im Wesentlichen der Ausführungsform der Fig. 2a, wobei lediglich einer der beiden Teilkanäle mit Aufladeelementen 5 versehen ist. Dadurch wird ein Teilstrom des ersten Teilkanals 11 je nach Ausgestaltung der Aufladeelemente 5 entweder positiv oder negativ aufgeladen, wobei der Teilstrom des zweiten Teilkanals 12 nicht aufgeladen wird. Gegebenenfalls ist es ausreichend, dass die Ladung eines Holzfeinstaubpartikels ausreicht, um ein neutrales Holzfeinstaubpartikel anzuziehen, womit es zu einer Agglomeration im Agglomerationsabschnitt 3 kommt.

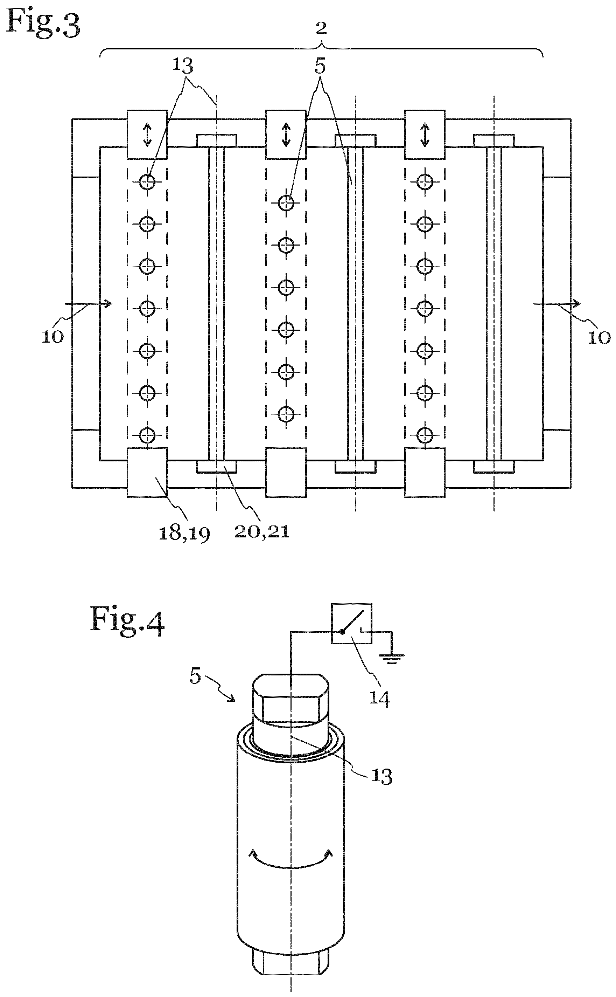

Fig. 3 zeigt eine weitere mögliche Ausführungsform eines Teils einer Abscheidevorrichtung in einer schematischen Darstellung. Der partikelbeladene Luftstrom wird entlang der Strömungsrichtung 10 durch einen Aufladeabschnitt 2 befördert. Die Konfiguration gemäß Fig. 3 kann beispielsweise der Konfiguration eines Teilkanals 11 oder 12 aus den Figuren 2a oder 2c entsprechen. Gegebenenfalls kann die Konfiguration der Fig. 3 in nicht erfindungsgemäßer Weise auch unterschiedlich aufladende Aufladeelemente 5, wie beispielsweise in Fig. 2b beschrieben, umfassen.

Wie in Fig. 3 gezeigt, sind die Aufladeelemente 5 jeweils gruppenweise angeordnet. Insbesondere ist eine erste Gruppe 18 von Aufladeelementen 5 vorgesehen. Diese erste Gruppe 18 ist insbesondere durch einen ersten Rahmen 19 gehalten. In dieser Ausführungsform sind mehrere Aufladeelemente 5 der ersten Gruppe 18 parallel zueinander angeordnet in dem ersten Rahmen 19 vorgesehen. Bevorzugt ist vorgesehen, dass dieser erste Rahmen 19 im Wesentlichen quer zur Strömungsrichtung 10 angeordnet ist, sodass eine rechenförmige Anordnung der Aufladeelemente 5 gebildet ist. Gegebenenfalls ist vorgesehen, dass der erste Rahmen 19 quer zur Strömungsrichtung 10 bewegbar und gegebenenfalls arretierbar angeordnet ist. Dadurch kann die Lage der Aufladeelemente 5 der ersten Gruppe 18 variiert bzw. verändert werden.

Gemäß Fig. 3 ist auch eine zweite Gruppe 20 von Aufladeelementen 5 vorgesehen. Die zweite Gruppe 20 der Aufladeelemente 5 ist ebenfalls in einem zweiten Rahmen 21 angeordnet. Dieser zweite Rahmen 21 kann ähnlich oder gleich ausgebildet sein wie der erste Rahmen 19. Insbesondere können die Aufladeelemente 5 der zweiten Gruppe 20 ebenfalls parallel zueinander rechenförmig angeordnet sein.

In der vorliegenden Ausführungsform ist der Verlauf der Aufladeelemente 5 der ersten Gruppe 18 im Wesentlichen 90° verdreht zum Verlauf der Aufladeelemente 5 der zweiten Gruppe 20 angeordnet, wobei dieser Winkel in einer Normalebene der Strömungsrichtung 10 angegeben ist. Dadurch ist eine gitterförmige Anordnung gebildet. Auch der zweite Rahmen 21 kann insbesondere quer zur Strömungsrichtung 10 bewegbar ausgebildet sein, um eine Verlagerung der Aufladeelemente 5 der zweiten Gruppe 20 zu ermöglichen.

Gemäß Fig. 3 sind mehrere weitere Gruppen von Aufladeelementen 5 vorgesehen, die ebenfalls in Rahmen gehalten sind. Dadurch kann eine gitterförmige Struktur gebildet werden, durch die der partikelbeladene Luftstrom hindurchgeleitet wird.

Fig. 4 zeigt eine schematische Darstellung von Details eines Aufladeelements 5. Das Aufladeelement 5 verläuft entlang einer Längsachse 13 und ist insbesondere zylindrisch ausgebildet. Wie in Fig. 4 dargestellt, kann in allen Ausführungsformen lediglich der Mantel bzw. die Oberfläche des Aufladeelements 5 aus dem ausgewählten triboelektrischen Material gefertigt sein.

Gemäß der vorliegenden Ausführungsform kann das Aufladeelement 5 um seine Längsachse 13 drehbar angeordnet sein. Gegebenenfalls ist das Aufladeelement 5 arretierbar, sodass eine Drehung zugelassen oder verhindert werden kann.

In allen Ausführungsformen ist bevorzugt eine Vorrichtung 14 zur periodischen Erdung vorgesehen. Diese Vorrichtung 14 dient insbesondere der Erdung und der Unterbrechung der Erdung der Aufladeelemente 5. Durch die Erdung können die Aufladeelemente 5 regeneriert werden, um eine fortlaufende oder intermittierende triboelektrische Aufladung der Holzfeinstaubpartikel zu ermöglichen.

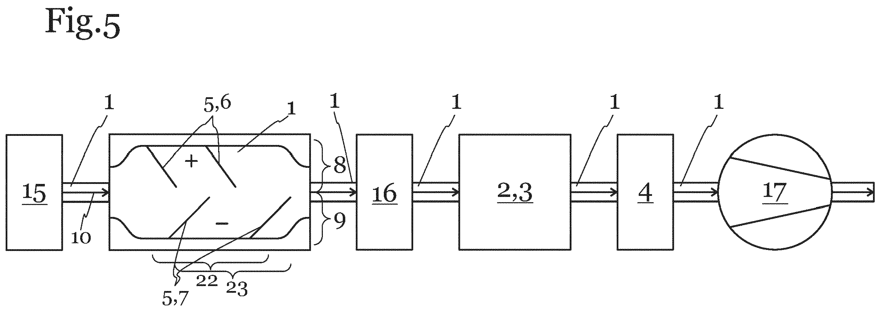

Fig. 5 zeigt eine Anordnung einer Holzbearbeitungsmaschine 15 mit einer Abscheidevorrichtung. Hierbei sind entlang eines Strömungskanals 1 ein zweiter Aufladeabschnitt 22, ein zweiter Agglomerationsabschnitt 23 ein Vorfilter 16, ein erster Aufladeabschnitt 2, ein erster Agglomerationsabschnitt 3, ein mechanischer Abscheider 4 und ein Gebläse 17 vorgesehen. Der zweiter Aufladeabschnitt 22 und der zweite Agglomerationsabschnitt 23 sind insbesondere zwischen der Holzbearbeitungsmaschine 15 und dem Vorfilter 16 vorgesehen, um beispielsweise größere, einfach aufladbare Partikel zu agglomerieren und anschließend im Vorfilter 16 aus dem Luftstrom zu entfernen. Zur Aufladung der im Luftstrom vorhandenen Partikel sind im zweiten Aufladeabschnitt 22 und im zweiten Agglomerationsabschnitt 23 die Aufladeelemente 5 als, in den Strömungskanal 1 ragende bzw. im Strömungskanal 1 angeordnete, Leit- bzw. Prallelemente ausgebildet. Diese Leit- bzw. Prallelemente sind bevorzugt flächen- oder plattenförmig ausgebildet.

Im Anschluss an den zweiten Agglomerationsabschnitt 23 ist ein Vorfilter 16 vorgesehen um Partikel sowie Agglomerate mit einer Größe von beispielsweise größer als 5µm zu filtern. Nach dem Vorfilter 16 sind in der vorliegenden Ausführungsform ein erster Aufladeabschnitt 2 und ein erster Agglomerationsabschnitt 3 vorgesehen, um die Partikel, die im Vorfilter 16 nicht abgeschieden werden konnten zu größeren Partikeln zu agglomerieren. Im Anschluss an den ersten Agglomerationsabschnitt 3 ist in Strömungsrichtung 10 bevorzugt ein mechanischer Abscheider 4, zur mechanischen Abscheidung des, zu größeren Partikeln agglomerierten Holzfeinstaubs vorgesehen sein.

Insbesondere entspricht die in Figur 5 gezeigte Anordnung im Wesentlichen der Anordnung aus Figur 1a, wobei zusätzlich ein zweiter Aufladeabschnitt 22 und ein zweiter Agglomerationsabschnitt 23 vorgesehen sind, und wobei die Aufladeelemente 5 dieser Abschnitte 22, 23 als Leit- bzw. Prallelemente ausgebildet sind.

Durch die mehrstufige Aufladung, Agglomeration und Filterung kann eine effektivere und Abscheidung von Partikeln aus dem Luftstrom erfolgen. Zur weiteren Verbesserung können auch drei oder mehr Stufen zur Aufladung und Filterung der Partikel vorgesehen sein.

Grundsätzlich kann die in Figur 5 gezeigte Ausführungsform der Aufladeelemente 5 auch in mehreren oder in allen Aufladeabschnitten vorgesehen sein. Die Konfiguration der Aufladeelemente 5 als Prallelemente bzw. Leitelemente hat insbesondere den Vorteil, dass durch die Elemente der partikelbeladene Luftstrom mit vergleichsweise geringem Strömungswiderstand geleitet wird, wobei gleichzeitig eine Aufladung der Partikel erfolgt.

Die als Prallelemente bzw. Leitelemente ausgebildeten Aufladeelemente 5 sind beispielsweise schräggestellte flächenförmige oder plattenförmige Aufladeelemente, die insbesondere schräg zur und/oder schräg in Strömungsrichtung verlaufen. Insbesondere sind die derart ausgestalteten Aufladeelemente 5 abwechselnd beidseitig des Strömungskanals 1 angeordnet, sodass beispielsweise eine mäanderförmige oder schlangenförmige Strömung erzeugt wird. Beispielsweise sind auf einer Seite des Strömungskanals 1 positiv aufladende Elemente 6 und auf der anderen Seite des Strömungskanals 1 negativ aufladende Elemente 7 angeordnet. Dadurch ist der positiv aufladende Abschnitt 8 auf einer Seite des Strömungskanals 1 und der negativ aufladende Abschnitt 9 auf der anderen Seite des Strömungskanals 1 vorgesehen.

Gemäß einer alternativen Ausführungsform können jedoch auch auf einer Seite des Strömungskanals 1 positiv und negativ aufladende Elemente vorgesehen sein. Insbesondere können auf beiden Seiten positiv und negativ aufladende Elemente vorgesehen sein.

Insbesondere kann demnach vorgesehen sein, dass die Aufladeelemente 5 als plattenförmige oder flächenförmige Leitelemente bzw. Prallelemente ausgebildet sind, die in den Strömungskanal 1 ragen oder im Strömungskanal 1 angeordnet sind. Diese Aufladeelemente 5 sind insbesondere derart angeordnet, dass sie schräggestellt in die Strömung und insbesondere in den Strömungskanal 1 ragen, wobei die Schrägstellung insbesondere in Strömungsrichtung weist. Bevorzugt sind diese Aufladeelemente 5 im Wesentlichen wie in Figur 5 schematisch dargestellt, ausgebildet. Die grundsätzliche triboelektrische Wirkungsweise dieser Aufladeelemente 5 stimmt mit den Aufladeelementen 5 der übrigen Ausführungsformen überein.

## Patentansprüche

1. Abscheidevorrichtung für Holzstaubpartikel,
- wobei die Holzstaubpartikel Holzfeinstaubpartikel mit einer Größe von kleiner als 5 µm, insbesondere mit einer Größe von kleiner als 1 µm, sind oder umfassen,
- wobei die Abscheidevorrichtung einen Strömungskanal (1) umfasst,
- wobei der Strömungskanal (1) im Betrieb von einem mit den Holzfeinstaubpartikeln beladenen Luftstrom durchströmt ist,
- wobei der Strömungskanal (1) einen elektrostatischen Aufladeabschnitt (2) zur zumindest teilweisen elektrostatischen Aufladung der Holzfeinstaubpartikel umfasst,
- wobei der Strömungskanal (1) im oder nach dem elektrostatischen Aufladeabschnitt (2) einen Agglomerationsabschnitt (3) zur elektrostatischen Agglomeration von Holzfeinstaubpartikeln zu Holzstaubagglomeraten umfasst,
- wobei dem Agglomerationsabschnitt (3) ein mechanischer Abscheider (4) zur Abscheidung der Holzstaubagglomeraten nachgeordnet ist,
wobei im Aufladeabschnitt (2) mehrere triboelektisch wirkende Aufladeelemente (5) zur Änderung der elektrischen Ladung mehrerer Holzfeinstaubpartikel vorgesehen sind,
- wobei die Aufladeelemente (5) positiv aufladende Elemente (6) umfassen, die eine positive Aufladung der diese Elemente berührenden Holzstaubpartikel oder Holzfeinstaubpartikel bewirken, und
- die Aufladeelemente (5) negativ aufladende Elemente (7) umfassen, die eine negative Aufladung der diese Elemente berührenden Holzstaubpartikel oder Holzfeinstaubpartikel bewirken
wobei der Aufladeabschnitt (2) mindestens einen positiv aufladenden Abschnitt (8) umfasst, in dem die positiv aufladenden Elemente (6) vorgesehen sind, wobei der Aufladeabschnitt (2) mindestens einen negativ aufladenden Abschnitt (9) umfasst, in dem die negativ aufladenden Elemente (7) vorgesehen sind, und wobei der positiv aufladende Abschnitt (8) und der negativ aufladende Abschnitt (9) räumlich voneinander abgegrenzt, insbesondere entlang der Strömungsrichtung (10) des mit Holzfeinstaubpartikeln beladenen Luftstroms nacheinander und/oder nebeneinander angeordnet sind, **dadurch gekennzeichnet,**
- **dass** im Aufladeabschnitt (2) zwei, insbesondere strömungstechnisch parallel verlaufende, Teilkanäle zur Aufteilung des mit Holzfeinstaubpartikeln beladenen Luftstroms in zwei Teilströme vorgesehen sind,
- wobei im ersten Teilkanal (11) Aufladeelemente (5) zur Aufladung der Holzstaubpartikel oder Holzfeinstaubpartikel in der einen, insbesondere positiven oder negativen, Polarität vorgesehen sind,
- und wobei im zweiten Teilkanal (12) keine Aufladeelemente (5) oder Aufladeelemente (5) zur Aufladung der Holzstaubpartikel oder Holzfeinstaubpartikel in der anderen Polarität vorgesehen sind.

2. Abscheidevorrichtung nach Anspruch 1, **dadurch gekennzeichnet,**
- **dass** die negativ aufladenden Elemente (6) aus einem Material gebildet sind oder ein Material umfassen, das in der triboelektrischen Reihe oberhalb von Holz angeordnet ist, also beispielsweise Tierfell, Glas, Nylon, Wolle, Seide, Aluminium, Papier, Baumwolle oder Eisen ist oder umfasst,
- **und/oder dass** die positiv aufladenden Elemente (7) aus einem Material gebildet sind oder ein Material umfassen, das in der triboelektrischen Reihe unterhalb von Holz angeordnet ist, also beispielsweise Hartgummi, Kupfer, Nickel, Bronze, Gold, Platin, Kunstseide, Polystyren, Polyester, Polyurethan, Polyethylen, Polypropylen, PVC, Vinyl, Silikon oder Teflon ist oder umfasst.

3. Abscheidevorrichtung nach Anspruch 1, **dadurch gekennzeichnet, dass** die beiden Teilkanäle (11, 12) zur Zusammenführung der beiden unterschiedlich geladenen Teilströme und zur Agglomeration der unterschiedlich geladenen Holzstaubpartikel oder Holzfeinstaubpartikel zu Holzstaubagglomeraten im Agglomerationsabschnitt (3) zusammengeführt sind.

4. Abscheidevorrichtung nach einem der Ansprüche 1 bis 3, **dadurch gekennzeichnet,**
- **dass** die Aufladeelemente (5) zur Aufladung der Holzstaubpartikel oder Holzfeinstaubpartikel in den Kanal, insbesondere in zumindest einen der Teilkanäle (11, 12) ragen,
- **und/oder dass** die Aufladeelemente (5) des Aufladeabschnitts (2) im Betrieb vom holzfeinstaubpartikelbeladenen Luftstrom umströmt sind.

5. Abscheidevorrichtung nach einem der Ansprüche 1 bis 4, **dadurch gekennzeichnet**
- **dass** die Aufladeelemente (5) im Aufladeabschnitt (2) entlang der Strömungsrichtung (10) versetzt oder verdreht zueinander angeordnet sind,
- **und/oder dass** die Aufladeelemente (5) eine strömungstechnisch günstige Form, wie beispielsweise eine quer angeströmte zylindrische Form, aufweisen.

6. Abscheidevorrichtung nach einem der Ansprüche 1 bis 5, **dadurch gekennzeichnet,**
- **dass** die im Aufladeabschnitt (2) angeordneten Aufladeelemente (5) zur Aufladung der Holzstaubpartikel oder Holzfeinstaubpartikel im Aufladeabschnitt (2) in zumindest eine Richtung vorzugsweise in alle drei Raumrichtungen bewegbar angeordnet sind,
- **und/oder dass** die Aufladeelemente (5) um ihre Längsachse (13) drehbar angeordnet sind.

7. Abscheidevorrichtung nach einem der Ansprüche 1 bis 6, **dadurch gekennzeichnet, dass** die Aufladeelemente (5) je einen leitenden Kern, wie beispielsweise einen Metallkern, umfassen, der an seiner dem partikelbeladenen Luftstrom ausgesetzten Außenseite mit einer Schicht eines triboelektrisch wirkenden Materials versehen ist,
oder dass die Aufladeelemente (5) je einen Kern, der gegebenenfalls leitend ausgeführt ist, und eine den Kern umschließende leitende Hülse umfassen, die an ihrer dem partikelbeladenen Luftstrom ausgesetzten Außenseite mit einer Schicht eines triboelektrisch wirkenden Materials versehen ist:

8. Abscheidevorrichtung nach einem der Ansprüche 1 bis 7, **dadurch gekennzeichnet, dass** die Aufladeelemente (5) geerdet oder erdbar sind, und/oder dass eine Vorrichtung (14) zur periodischen oder intermittierenden Erdung und Unterbrechung der Erdung der Aufladeelemente (5) vorgesehen ist.

9. Abscheidevorrichtung nach einem der Ansprüche 1 bis 8, **dadurch gekennzeichnet, dass** der mechanische Abscheider (4) zur Abscheidung der Holzstaubagglomerate als Trägheitsabscheider, Fliehkraftabscheider, insbesondere als Zyklon, oder als Filter ausgebildet ist.

10. **Anordnung** einer Holzbearbeitungsmaschine (15), vorzugsweise einer spanabhebenden Holzbearbeitungsmaschine (15), mit einer Abscheidevorrichtung, insbesondere Anlage umfassend eine Holzbearbeitungsmaschine (15) und eine Abscheidevorrichtung, **dadurch gekennzeichnet, dass** die Abscheidevorrichtung nach einem der vorangegangenen Ansprüche ausgebildet ist.

11. Anordnung nach Anspruch 10, **dadurch gekennzeichnet,**
- **dass** entlang der Strömungsrichtung (10) des holzfeinstaubpartikelbeladenen Luftstroms vor dem Agglomerationsabschnitt (3), insbesondere im Strömungskanal (1), ein Vorfilter (16) zur Vorfilterung von Holzpartikeln mit einer Größe von größer als 5 µm vorgesehen ist,
- und/oder dass ein Gebläse (17) zur Förderung des holzfeinstaubpartikelbeladenen Luftstroms vorgesehen ist.

12. **Verfahren** zur Abscheidung von Holzstaubpartikeln und von Holzfeinstaubpartikeln mit einer Größe von kleiner als 5 µm, insbesondere mit einer Größe von kleiner als 1 µm, aus einem mit den Holzfeinstaubpartikeln beladenen Luftstrom,
- wobei zumindest ein Teil des partikelbeladenen Luftstroms durch einen elektrostatischen Aufladeabschnitt (2) geleitet wird, in dem zumindest ein Teil der Holzstaubpartikel oder Holzfeinstaubpartikel elektrostatisch aufgeladen wird,
- wobei der partikelbeladene Luftstrom durch einen dem elektrostatischen Aufladeabschnitt (2) nachfolgenden Agglomerationsabschnitt (3) zur elektrostatischen Agglomeration der Holzstaubpartikel oder Holzfeinstaubpartikel zu Holzstaubagglomeraten geleitet wird,
- und wobei der partikelbeladene Luftstrom durch einen dem Agglomerationsabschnitt (3) nachgeordneten mechanischer Abscheider (4) zur Abscheidung der Holzstaubagglomerate geleitet wird,
wobei die elektrostatische Aufladung im Aufladeabschnitt (2) durch tribolektrische Aufladung an triboelektisch wirkenden Aufladeelemente (5) erfolgt, wobei die Aufladeelemente (5) positiv aufladende Elemente (6) umfassen, die eine positive Aufladung der diese Elemente berührenden Holzstaubpartikel oder Holzfeinstaubpartikel bewirken, und
die Aufladeelemente (5) negativ aufladende Elemente (7) umfassen, die eine negative Aufladung der diese Elemente berührenden Holzstaubpartikel oder Holzfeinstaubpartikel bewirken,
**dadurch gekennzeichnet,**
- **dass** im Aufladeabschnitt (2) zwei, insbesondere strömungstechnisch parallel verlaufende, Teilkanäle zur Aufteilung des mit Holzfeinstaubpartikeln beladenen Luftstroms in zwei Teilströme vorgesehen sind,
- wobei im ersten Teilkanal (11) Aufladeelemente (5) zur Aufladung der Holzstaubpartikel oder Holzfeinstaubpartikel in der einen, insbesondere positiven oder negativen, Polarität vorgesehen sind,
- und wobei im zweiten Teilkanal (12) keine Aufladeelemente (5) oder Aufladeelemente (5) zur Aufladung der Holzstaubpartikel oder Holzfeinstaubpartikel in der anderen Polarität vorgesehen sind.

## Claims

1. A separating device for wood dust particles,
- wherein the wood dust particles are, or comprise, fine wood dust particles having a size of less than 5 µm, in particular having a size of less than 1 µm,
- wherein the separation device comprises a flow channel (1)
- wherein, during operation, an air stream loaded with fine wood dust particles flows through the flow channel (1),
- wherein the flow channel (1) comprises an electrostatic charging section (2) for at least partially electrostatically charging the fine wood dust particles,
- wherein the flow channel (1) comprises, within or downstream of the electrostatic charging section (2), an agglomeration section (3) for the electrostatic agglomeration of fine wood dust particles into wood dust agglomerates,
- wherein a mechanical separator (4) for separating the wood dust agglomerates is arranged downstream of the agglomeration section (3),
wherein several triboelectrically active charging elements (5) are provided in the charging section (2) to alter the electrical charge of several fine wood dust particles,
- wherein the charging elements (5) comprise positively charging elements (6) that cause the wood dust particles or fine wood dust particles coming into contact with these elements to become positively charged, and the charging elements (5) comprise negatively charging elements (7) that cause the wood dust particles or fine wood dust particles coming into contact with these elements to become negatively charged
- wherein the charging section (2) comprises at least one positively charging section (8) in which the positively charging elements (6) are provided,
wherein the charging section (2) comprises at least one negatively charging section (9) in which the negatively charging elements (7) are provided, and wherein the positively charging section (8) and the negatively charging section (9) are spatially separated from one another and are arranged, in particular along the flow direction (10) of the air stream loaded with fine wood dust particles, sequentially and/or next to one another, **characterised**
- **in that** in the charging section (2), two, in particular flow-parallel, sub-channels are provided for dividing the air stream loaded with fine wood dust particles into two sub-streams
- wherein in the first sub-channel (11) charging elements (5) for charging the wood dust particles or fine wood dust particles with one, in particular positive or negative, polarity are provided
- and wherein in the second sub-channel (12) no charging elements (5) are provided, or charging elements (5) for charging the wood dust particles or fine wood dust particles with the other polarity are provided.

2. The separating device according to claim 1, **characterised**
- **in that** the negatively charging elements (6) are formed of or comprise a material that is ranked above wood in the triboelectric series, such as, for example, animal fur, glass, nylon, wool, silk, aluminium, paper, cotton, or iron,
- **and/or in that** the positively charging elements (7) are formed from or comprise a material that is ranked below wood in the triboelectric series, such as, for example, hard rubber, copper, nickel, bronze, gold, platinum, rayon, polystyrene, polyester, polyurethane, polyethylene, polypropylene, PVC, vinyl, silicone, or Teflon.

3. The separating device according to claim 1, **characterised in that** the two sub-channels (11, 12) are merged in the agglomeration section (3) to merge the two differently charged sub-streams and to agglomerate the differently charged wood dust particles or fine wood dust particles into wood dust agglomerates.

4. The separating device according to one of claims 1 to 3, **characterised**
- **in that** the charging elements (5) for charging the wood dust particles or fine wood dust particles extend into the channel, in particular into at least one of the sub-channels (11, 12),
- **and/or in that**, during operation, the air stream loaded with fine wood dust particles flows around the charging elements (5) of the charging section (2).

5. The separating device according to one of claims 1 to 4, **characterised**
- **in that** the charging elements (5) in the charging section (2) are arranged in a staggered or rotated manner relative to one another along the flow direction (10),
- **and/or in that** the charging elements (5) have a flow-favourable shape, such as, for example, a cylindrical shape exposed to a transverse flow.

6. The separating device according to one of claims 1 to 5, **characterised**
- **in that** the charging elements (5) arranged in the charging section (2) are arranged to be movable in at least one, preferably all three, spatial directions for charging the wood dust particles or fine wood dust particles in the charging section (2),
- **and/or in that** the charging elements (5) are arranged rotatably about their longitudinal axis (13).

7. The separating device according to one of claims 1 to 6, **characterised in that** the charging elements (5) each comprise a conductive core, such as, for example, a metal core, which is provided on its outer surface, which is exposed to the particle-loaded air stream, with a layer of a triboelectrically active material, or **in that** the charging elements (5) each comprise a core, which may optionally be conductive, and a conductive sleeve surrounding the core, the outer surface of which, which is exposed to the particle-loaded air stream, is provided with a layer of a triboelectrically active material.

8. The separating device according to one of claims 1 to 7, **characterised in that** the charging elements (5) are grounded or groundable, and/or **in that** a device (14) is provided for periodically or intermittently grounding and breaking the ground connection of the charging elements (5).

9. The separating device according to one of claims 1 to 8, **characterised in that** the mechanical separator (4) for separating the wood dust agglomerates is designed as an inertial separator, a centrifugal separator, in particular a cyclone, or as a filter.

10. **An arrangement** of a woodworking machine (15), preferably a chip-removing woodworking machine (15), with a separating device, in particular a system comprising a woodworking machine (15) and a separating device, **characterised in that** the separating device is configured according to one of the preceding claims.

11. The arrangement according to claim 10, **characterised**
- **in that**, along the flow direction (10) of the air stream loaded with fine wood dust particles upstream of the agglomeration section (3), in particular within the flow channel (1), a pre-filter (16) for pre-filtering wood particles having a size of more than 5 µm is provided,
- **and/or in that** a fan (17) for conveying the air stream loaded with fine wood dust particles is provided.

12. **A method** for separating wood dust particles and fine wood dust particles having a size of less than 5 µm, in particular having a size of less than 1 µm, from an air stream loaded with the fine wood dust particles,
- wherein at least part of the particle-loaded air stream is directed through an electrostatic charging section (2), in which at least some of the wood dust particles or fine wood dust particles are electrostatically charged,
- wherein the particle-loaded air stream is directed through an agglomeration section (3) following the electrostatic charging section (2) for the electrostatic agglomeration of the wood dust particles or fine wood dust particles into wood dust agglomerates,
- and wherein the particle-loaded air stream is directed through a mechanical separator (4) arranged downstream of the agglomeration section (3) for separating the wood dust agglomerates,
wherein the electrostatic charging in the charging section (2) occurs by triboelectric charging at triboelectrically active charging elements (5), wherein the charging elements (5) comprise positively charging elements (6) which cause the wood dust particles or fine wood dust particles coming into contact with these elements to become positively charged, and
the charging elements (5) comprise negatively charging elements (7) which cause the wood dust particles or fine wood dust particles coming into contact with these elements to become negatively charged,
**characterised**
- **in that** in the charging section (2), two, in particular flow-parallel, sub-channels are provided for dividing the air stream loaded with fine wood dust particles into two sub-streams,
- wherein in the first sub-channel (11) charging elements (5) for charging the wood dust particles or fine wood dust particles with one, in particular positive or negative, polarity are provided,
- and wherein in the second sub-channel (12) no charging elements (5) are provided, or charging elements (5) for charging the wood dust particles or fine wood dust particles with the other polarity are provided.

## Revendications

1. Dispositif de séparation pour des particules de poussière de bois,
- les particules de poussière de bois étant ou comprenant des particules fines de poussière de bois d'une taille inférieure à 5 µm, particulièrement inférieure à 1 µm,
- le dispositif de séparation comprenant un canal d'écoulement (1)
- le canal d'écoulement (1) étant traversé, en fonctionnement, par un flux d'air chargé des particules fines de poussière de bois,
- le canal d'écoulement (1) comprenant une section de chargement électrostatique (2) destinée au chargement électrostatique au moins partiel des particules fines de poussière de bois,
- le canal d'écoulement (1) comprenant, dans la section de chargement électrostatique (2) ou en aval de celle-ci, une section d'agglomération (3) destinée à l'agglomération électrostatique de particules fines de poussière de bois en agglomérats de poussière de bois,
- un séparateur mécanique (4) destiné à séparer les agglomérats de poussière de bois étant disposé en aval de la section d'agglomération (3),
plusieurs éléments de chargement (5) à effet triboélectrique étant prévus dans la section de chargement (2) pour modifier la charge électrique de plusieurs particules fines de poussière de bois,
- les éléments de chargement (5) comprenant des éléments de chargement positif (6) qui provoquent un chargement positif des particules de poussière de bois ou des particules fines de poussière de bois entrant en contact avec ces éléments, et les éléments de chargement (5) comprenant des éléments de chargement négatif (7) qui provoquent un chargement négatif des particules de poussière de bois ou des particules fines de poussière de bois entrant en contact avec ces éléments,
- la section de chargement (2) comprenant au moins une section de chargement positif (8), dans laquelle sont prévus les éléments de chargement positif (6),
la section de chargement (2) comprenant au moins une section de chargement négatif (9), dans laquelle sont prévus les éléments de chargement négatif (7), et la section de chargement positif (8) et la section de chargement négatif (9) étant spatialement séparées l'une de l'autre, particulièrement étant disposées successivement et/ou côte à côte le long de la direction d'écoulement (10) du flux d'air chargé de particules fines de poussière de bois, **caractérisé en ce que**
- deux canaux partiels, particulièrement s'étendant parallèlement du point de vue de l'écoulement, sont prévus dans la section de chargement (2) pour répartir le flux d'air chargé de particules fines de poussière de bois en deux flux partiels,
- les éléments de chargement (5) destinés au chargement des particules de poussière de bois ou des particules fines de poussière de bois selon une polarité, particulièrement positive ou négative, étant prévus dans le premier canal partiel (11),
- et aucun élément de chargement (5) ou des éléments de chargement (5) destinés au chargement des particules de poussière de bois ou des particules fines de poussière de bois selon l'autre polarité étant prévu(s) dans le deuxième canal partiel (12).

2. Dispositif de séparation selon la revendication 1, **caractérisé**
- **en ce que** les éléments de chargement négatif (6) sont formés d'un matériau ou comprennent un matériau qui est disposé, dans la série triboélectrique, au-dessus du bois, par exemple, de la fourrure animale, du verre, du nylon, de la laine, de la soie, de l'aluminium, du papier, du coton ou du fer, ou qui en comprennent,
- et/ou en ce que les éléments de chargement positif (7) sont formés d'un matériau ou comprennent un matériau qui est disposé, dans la série triboélectrique, au-dessous du bois, par exemple du caoutchouc dur, du cuivre, du nickel, du bronze, de l'or, du platine, de la rayonne, du polystyrène, du polyester, du polyuréthane, du polyéthylène, du polypropylène, du PVC, du vinyle, du silicone ou du Téflon, ou qui en comprennent.

3. Dispositif de séparation selon la revendication 1, **caractérisé en ce que** les deux canaux partiels (11, 12) sont réunis dans la section d'agglomération (3) afin de réunir les deux flux partiels chargés différemment et d'agglomérer les particules de poussière de bois ou les particules fines de poussière de bois chargées différemment
en agglomérats de poussière de bois.

4. Dispositif de séparation selon l'une des revendications 1 à 3, **caractérisé**
- **en ce que** les éléments de chargement (5) destinés au chargement des particules de poussière de bois ou des particules fines de poussière de bois font saillie dans le canal, particulièrement dans au moins l'un des canaux partiels (11, 12),
- **et/ou en ce que** les éléments de chargement (5) de la section de chargement (2) sont, en fonctionnement, entourés par le flux d'air chargé de particules fines de poussière de bois.

5. Dispositif de séparation selon l'une des revendications 1 à 4, **caractérisé**
- **en ce que** les éléments de chargement (5) dans la section de chargement (2) sont disposés de manière décalée ou tournée les uns par rapport aux autres le long de la direction d'écoulement (10),
- **et/ou en ce que** les éléments de chargement (5) présentent une forme favorable en termes d'écoulement, par exemple une forme cylindrique exposée transversalement au flux d'air.

6. Dispositif de séparation selon l'une des revendications 1 à 5, **caractérisé**
- **en ce que** les éléments de chargement (5) disposés dans la section de chargement (2) pour charger les particules de poussière de bois ou les particules fines de poussière de bois dans la section de chargement (2) sont disposés de manière à pouvoir être déplacés dans au moins une direction, de préférence dans les trois directions de l'espace,
- **et/ou en ce que** les éléments de chargement (5) sont disposés de manière à pouvoir tourner autour de leur axe longitudinal (13).

7. Dispositif de séparation selon l'une des revendications 1 à 6, **caractérisé en ce que** les éléments de chargement (5) comprennent chacun un noyau conducteur, par exemple un noyau métallique, dont la face extérieure exposée au flux d'air chargé de particules est revêtue d'une couche d'un matériau à effet triboélectrique, ou **en ce que** les éléments de chargement (5) comprennent chacun un noyau, le cas échéant, conducteur, et un manchon conducteur entourant le noyau, le manchon étant revêtu, sur sa face extérieure exposée au flux d'air chargé de particules, d'une couche d'un matériau à effet triboélectrique.

8. Dispositif de séparation selon l'une des revendications 1 à 7, **caractérisé en ce que** les éléments de chargement (5) sont mis à la terre ou peuvent être mis à la terre, et/ou **en ce qu'**un dispositif (14) destiné à effectuer périodiquement ou par intermittence la mise à la terre et l'interruption de la mise à la terre des éléments de chargement (5) est prévu.

9. Dispositif de séparation selon l'une des revendications 1 à 8, **caractérisé en ce que** le séparateur mécanique (4) destiné à séparer les agglomérats de poussière de bois est conçu comme un séparateur à inertie, un séparateur centrifuge, particulièrement un cyclone, ou comme un filtre.

10. **Agencement** d'une machine à travailler le bois (15), de préférence d'une machine à travailler le bois par enlèvement de copeaux (15), avec un dispositif de séparation, particulièrement une installation comprenant une machine à travailler le bois (15) et un dispositif de séparation, **caractérisé en ce que** le dispositif de séparation est réalisé selon l'une des revendications précédentes.

11. Agencement selon la revendication 10, **caractérisé**
- **en ce qu'**un préfiltre (16) destiné à la préfiltration de particules de bois d'une taille supérieure à 5 µm est prévu en amont de la section d'agglomération (3) dans la direction d'écoulement (10) du flux d'air chargé de particules fines de poussière de bois, particulièrement dans le canal d'écoulement (1),
- **et/ou en ce qu'**un ventilateur (17) destiné à acheminer le flux d'air chargé de particules fines de poussière de bois est prévu.

12. **Procédé** de séparation de particules de poussière de bois et de particules fines de poussière de bois d'une taille inférieure à 5 µm, particulièrement d'une taille inférieure à 1 µm, à partir d'un flux d'air chargé de particules fines de poussière de bois,
- au moins une partie du flux d'air chargé de particules étant conduite à travers une section de chargement électrostatique (2), dans laquelle au moins une partie des particules de poussière de bois ou des particules fines de poussière de bois est chargée électrostatiquement,
- le flux d'air chargé de particules étant conduit à travers une section d'agglomération (3), disposée en aval de la section de chargement électrostatique (2), pour l'agglomération électrostatique des particules de poussière de bois ou des particules fines de poussière de bois en agglomérats de poussière de bois,
- et le flux d'air chargé de particules étant conduit à travers un séparateur mécanique (4), disposé en aval de la section d'agglomération (3), pour séparer les agglomérats de poussière de bois,
le chargement électrostatique dans la section de chargement (2) étant effectué par chargement triboélectrique au moyen d'éléments de chargement (5) à effet triboélectrique, les éléments de chargement (5) comprenant des éléments de chargement positif (6) qui provoquent un chargement positif des particules de poussière de bois ou des particules fines de poussière de bois entrant en contact avec ces éléments, et
les éléments de chargement (5) comprenant des éléments de chargement négatif (7) qui provoquent un chargement négatif des particules de poussière de bois ou des particules fines de poussière de bois entrant en contact avec ces éléments,
**caractérisé en ce que**
- deux canaux partiels, particulièrement s'étendant parallèlement en termes d'écoulement, sont prévus dans la section de chargement (2) pour répartir le flux d'air chargé de particules fines de poussière de bois en deux flux partiels,
- les éléments de chargement (5) destinés au chargement des particules de poussière de bois ou des particules fines de poussière de bois selon une polarité, particulièrement positive ou négative, étant prévus dans le premier canal partiel (11),
- et aucun élément de chargement (5) ou des éléments de chargement (5) destinés au chargement des particules de poussière de bois ou des particules fines de poussière de bois selon l'autre polarité étant prévu(s) dans le deuxième canal partiel (12).
